# EUROPÄISCHE PATENTSCHRIFT

(11) **EP 3 710 317 B1**
(45) Veröffentlichungstag und Bekanntmachung des Hinweises auf die Patenterteilung: **14.09.2022**
(21) Anmeldenummer: 18789385.4
(22) Anmeldetag: 17.10.2018
(51) Int. Cl.: B60S 1/38

(54) **WISCHBLATT**
WIPER FRAME
BALAI D'ESSUIE-GLACE

(30) Priorität: 15.11.2017 DE 102017220325
(43) Veröffentlichungstag der Anmeldung: 23.09.2020
(73) Patentinhaber: Robert Bosch GmbH, 70442 Stuttgart (DE)
(72) Erfinder: ANGYAL, Adam, 3980 Sátoraljaújhely (HU); BELMANS, Thomas, 3980 Tessenderlo (BE); BUBBA, Marcello, 3210 Linden (BE); DEAK, Peter, 1188 Budapest (HU)
(86) Internationale Anmeldenummer: PCT/EP2018/078395
(87) Internationale Veröffentlichungsnummer: WO 2019/096526

(56) Entgegenhaltungen:
- EP-A1- 1 591 330
- WO-A1-2011/000403
- CN-A- 104 691 508
- DE-A1-102013 215 154
- FR-A1- 2 846 929
- FR-A1- 2 918 618

## Beschreibung

### Stand der Technik

Die Erfindung betrifft ein Wischblatt nach Gattung des unabhängigen Anspruchs.

Es sind schon zahlreiche Wischblätter bekannt, beispielsweise aus der DE 100 44 913 A1, die eine federnde Tragschiene und eine Wischleiste umfassen, wobei die Wischleiste an der Tragschiene befestigt ist. Weiterer Stand der Technik ist durch die EP 1 591 330 A1, die FR 2 918 618 A1, die WO 2011/000403 A1, die FR 2 846 929 A1, sowie die CN 104 691 508 A bekannt geworden.

Derartige Wischblätter weisen eine verhältnismäßig hohe Bauhöhe auf. Je nach Struktur der Wischleiste, kann es dadurch zu unangenehmen Windgeräuschen kommen und durch ungünstige Aerodynamik wird weiterhin das Wischbild beeinträchtigt.

Darüber hinaus entstehen bei derartigen Wischblättern Umlegegeräusche in den Wendelagen, was besonders bei stehenden Fahrzeugen, bei denen häufig der Verbrennungsmotor abgeschaltet ist, und bei Fahrzeugen mit Elektroantrieb als störend empfunden wird.

### Offenbarung der Erfindung

### Vorteile der Erfindung

Das erfindungsgemäße Wischblatt mit den Merkmalen des Hauptanspruchs hat den Vorteil, dass die Wischlippe eine im Wesentlichen starre Querschnittsstruktur aufweist und die Wischlippe im Querschnitt zwischen einem ersten Biegebereich und einem zweiten Biegebereich gehaltert ist. Auf diese Weise werden Störgeräusche minimiert, ein optimales Wischergebnis erzielt und eine niedrige Bauhöhe erreicht.

Durch die in den Unteransprüchen aufgeführten Maßnahmen ergeben sich vorteilhafte Weiterbildungen und Verbesserungen der im Hauptanspruch angegebenen Merkmale.

In einer einfachen und daher vorteilhaften Ausführungsform ist ein erster Befestigungsbereich zur Befestigung der Wischlippe an der Tragschiene vorgesehen, der sich zumindest an den ersten Biegebereich anschließt. Ebenso einfach und daher vorteilhaft ist es, wenn ein zweiter Befestigungsbereich vorgesehen ist, der sich an den zweiten Biegebereich anschließt und zur Befestigung der Wischlippe an der Tragschiene vorgesehen ist.

Erfindungsgemäß weist der erste Biegebereich und/oder der zweite Biegebereich mindestens eine Stützschulter zur Abstützung der Wischlippe auf.

Auf diese Weise wird das Wischbild noch weiter verbessert.

In einer besonders einfach herzustellenden und daher vorteilhaften Ausführungsform weist die Wischlippe im Querschnitt eine im Wesentlichen dreieckige Außenkontur auf.

Eine besonders gute Dämpfung wird vorteilhafterweise dadurch erzielt, dass der erste Biegebereich einen ersten Stabilisierungsbereich und einen ersten Elastizitätsbereich aufweist.

Ebenso vorteilhaft ist es, wenn der zweite Biegebereich einen zweiten Stabilisierungsbereich und einen zweiten Elastizitätsbereich aufweist.

Hierbei ist es besonders vorteilhaft, wenn sich der erste Elastizitätsbereich bzw. der zweite Elastizitätsbereich unmittelbar an die Wischlippe anschließt.

Ein besonders gutes Wischbild wird dann erzielt, wenn die erste Stützschulter am ersten Stabilisierungsbereich vorgesehen ist.

Ebenso vorteilhaft ist es wenn die zweite Stützschulter am zweiten Stabilisierungsbereich vorgesehen ist.

In einer einfachen kostengünstigen und daher vorteilhaften Ausführungsform ist die Tragschiene als im Querschnitt flache Federschiene mit Längskanten ausgebildet wobei der erste Befestigungsbereich und/oder der zweite Befestigungsbereich die Längskanten klammerartig umgreift.

Ebenso einfach, kostengünstig und daher vorteilhaft ist es, wenn die Tragschiene in Längsrichtung zweigeteilt ist und einen ersten Schienenteil und einen zweiten Schienenteil umfasst wobei der erste Befestigungsbereich die Wischleiste zwischen dem ersten Schienenteil und dem zweiten Schienenteil haltert.

### Zeichnungen

Verschiedene Ausführungsbeispiele der Erfindung sind in den Zeichnungen dargestellt und in der nachfolgenden Beschreibung näher erläutert. Es zeigen:
Figur 1 ein erfindungsgemäßes Wischblatt in einer perspektivischen Darstellung,
Figur 2 einen Querschnitt durch Tragschiene und Wischleiste eines nicht beanspruchten Wischblatts
Figur 3 eine Variation des Querschnitts aus Figur 2,
Figur 4 einen Querschnitt durch Tragschiene und Wischleiste eines erfindungsgemäßen Wischblatts,
Figur 5 einen Querschnitt aus Figur 4 während eines Wischvorgangs,
Figur 6 einen Querschnitt durch eine Wischleiste in einer Variation und
Figur 7 eine weitere Variation eines Querschnitts durch ein nicht beanspruchtes Wischblatt.

### Beschreibung des Ausführungsbeispiels

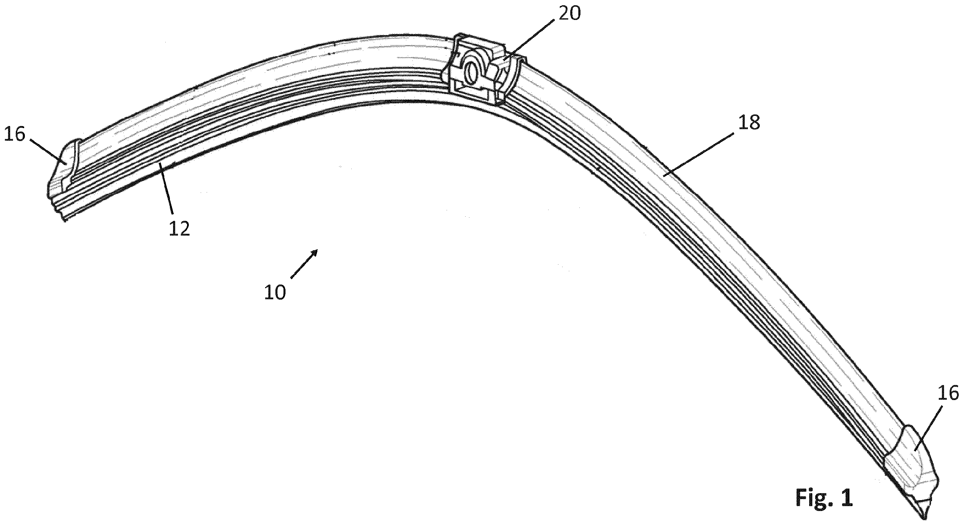

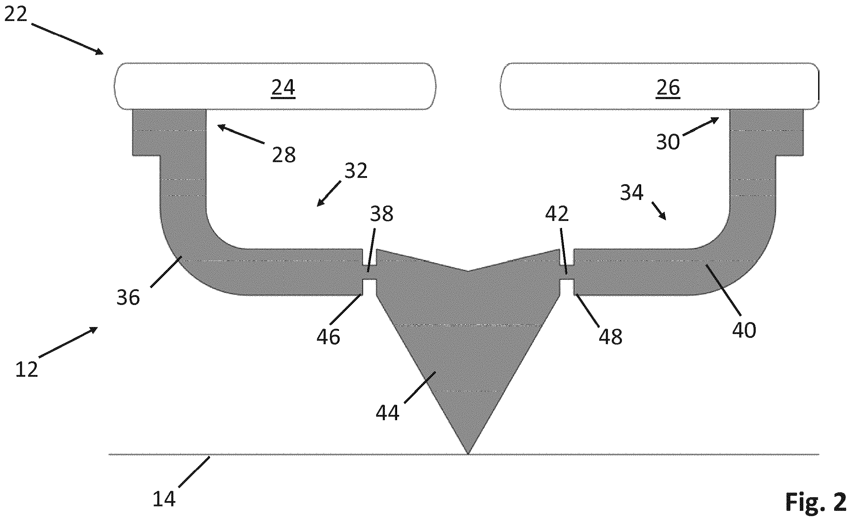

In Figur 1 ist ein erfindungsgemäßes Wischblatt 10 in einer perspektivischen Darstellung gezeigt. Das erfindungsgemäße Wischblatt 10 umfasst eine Wischleiste 12, die in montierter Position auf einer Scheibe 14 (Figur 2) aufliegt. Das Wischblatt 10 ist von im Wesentlichen länglicher Gestalt und weist an den Enden seiner Längserstreckung jeweils eine Endkappe 16 auf, die das Wischblatt 10 in Längsrichtung jeweils abschließt. Auf der der Wischleiste 12 abgewandten Seite ist hier noch eine Windabweisleiste 18 vorgesehen, die das Wischblatt 10 im Betrieb zusätzlich auf die Scheibe 14 drückt. Ebenso auf der der Wischleiste 12 abgewandten Seite ist ein Befestigungselement 20 angeordnet, das zur Befestigung des Wischblatts 10 an einem der Übersichtlichkeit halber nicht gezeichneten Wischerarm dient.

In Figur 2 ist ein Querschnitt durch ein nicht beanspruchtes Wischblatt 10 im Detail gezeigt. Aus Gründen der Übersichtlichkeit wurde die Windabweisleiste 18 (Figur 1) weggelassen. Das Wischblatt 10 weist eine Tragschiene 22 auf, an der die Wischleiste 12 befestigt ist. Die Tragschiene 22 ist hier geteilt ausgeführt, so dass sie ein erstes Schienenteil 24 und ein zweites Schienenteil 26 umfasst. Jedoch ist auch eine einteilige Ausführung möglich und sinnvoll. Auf der der Scheibe 14 zugewandten Unterseite der Tragschiene 22 ist die Wischleiste 12 angeklebt. Hierzu weist die Wischleiste 12 einen ersten Befestigungsbereich 28 und einen zweiten Befestigungsbereich 30 auf. An den ersten Befestigungsbereich 28 schließt sich ein biegsamer, erster Biegebereich 32 an. Ebenso schließt sich an den zweiten Befestigungsbereich 30 ein biegsamer, zweiter Biegebereich 34 an.

Der erste Biegebereich 32 umfasst einen biegsamen, ersten Stabilisierungsbereich 36 und einen ersten Elastizitätsbereich 38, der noch biegsamer oder elastischer ist, als der erste Stabilisierungsbereich 36. Ebenso umfasst der zweite Biegebereich 34 einen biegsamen, zweiten Stabilisierungsbereich 40 und einen zweiten Elastizitätsbereich 42, der ebenso noch biegsamer ist, als der zweite Stabilitätsbereich 40. Die Wischleiste 12 weist weiterhin eine Wischlippe 44 auf, die im Querschnitt von im Wesentlichen dreieckiger Gestalt ist und im Wesentlichen starr bezüglich ihres Querschnitts ausgebildet ist. Die Wischlippe 44 ist vom ersten Elastizitätsbereich 38 und vom zweiten Elastizitätsbereich 42 gehaltert, so dass sich die im Wesentlichen starre Wischlippe 44 in Richtung des ersten Stabilitätsbereichs 36 oder des zweiten Stabilitätsbereichs 40 bewegen kann.

Der erste Biegebereich 32, oder genauer, der erste Stabilitätsbereich 36 des ersten Biegebereichs 32, und der zweite Biegebereich 34 bzw. dessen Stabilitätsbereich 40, sind im Querschnitt länglich ausgebildet und führen vom ersten Befestigungsbereich 28 bzw. dem zweiten Befestigungsbereich 30 zunächst etwa senkrecht von der Tragschiene 22 nach unten und weisen nach einer Biegung um etwa 90 Grad einen waagrechten Bereich auf. Der erste Stabilitätsbereich 36 und der zweite Stabilitätsbereich 40 sind damit im Querschnitt etwa L-förmig, bzw. umgekehrt L-förmig.

An die waagrechten Bereiche des ersten Stabilitätsbereichs 36 bzw. zweiten Stabilitätsbereichs 40 schließt sich über den ersten Elastizitätsbereich 38 bzw. zweiten Elastizitätsbereich 42 die Wischlippe 44 an. Die Dicke des ersten Stabilitätsbereichs 36 und des zweiten Stabilitätsbereichs 40 beträgt im Querschnitt etwa 1 Millimeter. Die Dicke des ersten Elastizitätsbereichs 38 und des zweiten Elastizitätsbereichs 42 beträgt hier etwa 0.4 Millimeter. Der erste Elastizitätsbereich 38 und der zweite Elastizitätsbereich 42 ragen hierbei im Querschnitt etwa mittig aus der Stirnseite des L-Schenkels des ersten Stabilitätsbereich 36 bzw. dem zweiten Stabilitätsbereich 40 heraus. Die Breite des erste Elastizitätsbereichs 38 und des zweiten Elastizitätsbereichs 42, also der Abstand zwischen erstem Stabilitätsbereich 36 bzw. zweiten Stabilitätsbereich 40 und Wischlippe 44 beträgt etwa 0,3 Millimeter.

Da die Wischlippe 44 zwischen dem ersten Elastizitätsbereich 38 und dem zweiten Elastizitätsbereich 42 gehaltert ist besitzt sie eine gewisse Beweglichkeit, aufgrund der Elastizität des ersten Biegebereichs 32 und des zweiten Biegebereichs 34. Die Wischlippe 44 kann sich daher etwas drehen, bzw. abkippen. Zur Begrenzung dieser Beweglichkeit ist eine erste Stützschulter 46 und eine zweite Stützschulter 48 vorgesehen, an die die Wischlippe 44 bei einer zu starken Drehung bzw Kippung um eine gedachte, senkrecht auf der Zeichenebene stehende Achse, anschlägt.

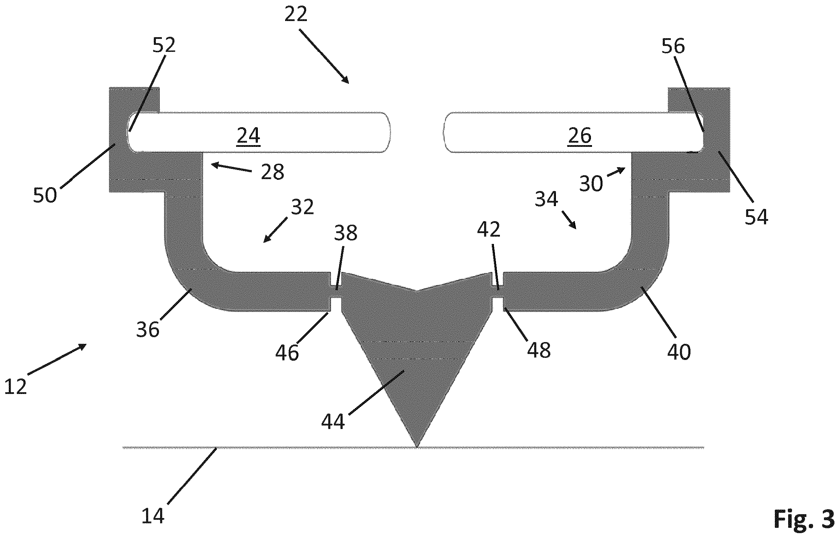

In Figur 3 ist eine Variation der in Figur 2 gezeigten Wischleiste gezeigt. Um Wiederholungen zu vermeiden wird hier nur der im ersten Befestigungsbereich 28 und zweitem Befestigungsbereich 30 liegende Unterschied beschrieben. Im Übrigen ist das Ausführungsbeispiel identisch mit dem aus Figur 2. Die Ausführungen zu Figur 2 gelten daher hier fort.

Der erste Befestigungsbereich 28 der Wischleiste 12 umfasst eine klammerartige erste Umschmiegung 50, die sich um eine erste Längskante 52 der Tragschiene 22 schmiegt. Ebenso weist der zweite Befestigungsbereich 30 eine zweite Umschmiegung 54 auf, die sich um eine zweite Längskante 56 der Tragschiene 22 schmiegt. Zusätzlich zu dieser klammerartigen Befestigung zwischen zweitem Befestigungsbereich 30 und der Tragschiene 22 bzw. zwischen dem ersten Befestigungsbereich 28 und der Tragschiene 22 kann auch Klebstoff oder ein anderes Befestigungsmittel verwendet werden.

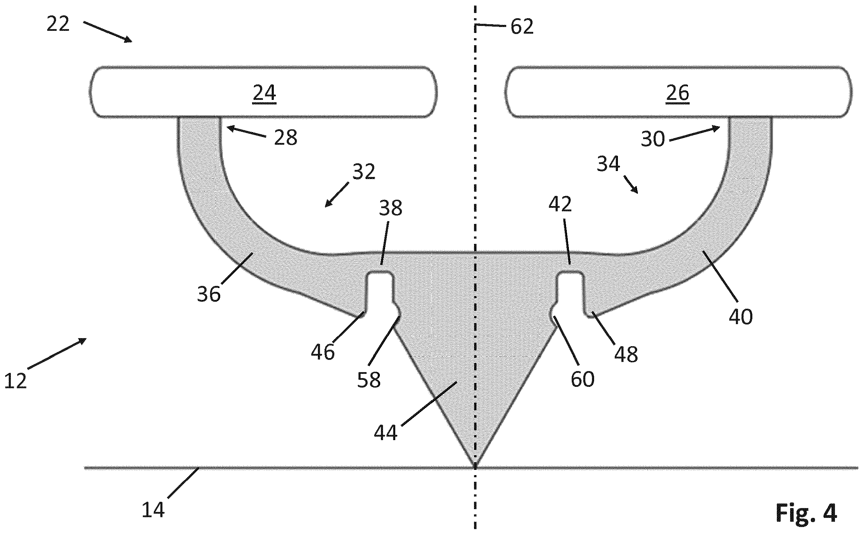

In Figur 4 ist der Querschnitt aus Figur 2 in einer Variation gezeigt. Die Tragschiene 22 haltert mit dem ersten Schienenteil 24 und dem zweiten Schienenteil 26 die Wischleiste 12. Wie in den vorangegangenen Beispielen, kann die Tragschiene 22 jedoch auch hier einteilig ausgeführt sein. Die Wischleiste 12 ist an der Tragschiene 22 angeklebt, jedoch kann auch hier eine andere Befestigung, beispielsweise die in Figur 3 gezeigte, verwendet werden.

An den ersten Befestigungsbereich 28, schließt sich der erste Stabilisierungsbereich 36 des ersten Biegebereichs 32 an, der auch hier von länglicher, L- oder C-förmiger Gestalt ist. Am freien Ende des ersten Stabilisierungsbereichs 36, also dem ersten Befestigungsbereich 28 abgewandten Ende, ist die Dicke des ersten Stabilisierungsbereichs 36, an den der erste Elastizitätsbereich 38 anschließt, etwas vergrößert und so auf der der Tragschiene 22 abgewandten Seite des Stabilisierungsbereichs 36 die erste Stützschulter 46 ausgebildet. Während bei den vorangegangenen Ausführungsbeispielen der erste Elastizitätsbereich 38 sich etwa mittig vom ersten Stabilisierungsbereich 36 aus erstreckte ist hier der erste Elastizitätsbereich 38 auf der der Tragschiene 22 zugewandten Seite des Stabilisierungsbereichs 36 ausgebildet, so dass sich auf der der Tragschiene 22 abgewandten Seite die erste Stützschulter 46 gebildet ist und auf der der Tragschiene 22 zugewandten Seite der erste Elastizitätsbereich 38 angeordnet ist. An den ersten Elastizitätsbereich 38 schließt sich die Wischlippe 44 an. Die Stirnseite des ersten Stabilitätsbereichs 36, die die erste Stützschulter 46 bildet, verläuft hier etwa senkrecht zu einer durch die Tragschiene 22 gebildeten Ebene; ebenso die Stirnseite des zweiten Stabilitätsbereichs 40.

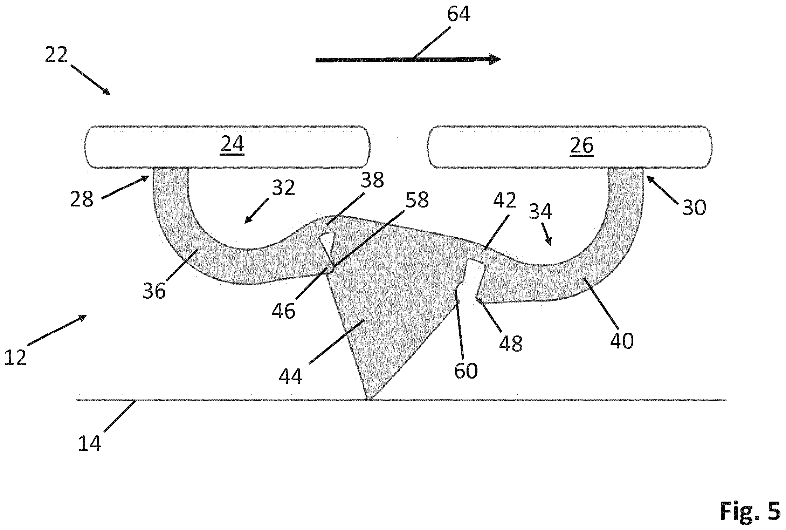

Die Wischlippe 44 ist von im Wesentlichen dreieckiger Gestalt und weist im Querschnitt einen ersten Einschnitt 58 auf Höhe der ersten Stützschulter 46 auf, der zur Aufnahme der ersten Stützschulter 46 im Betrieb vorgesehen ist. Dies ist in Figur 5 im Detail dargestellt. Die Dicke des ersten Stabilitätsbereichs 36 und des zweiten Stabilitätsbereichs 40 beträgt hier etwa 0.85 Millimeter, die Dicke des ersten Elastizitätsbereichs 38 und des zweiten Elastizitätsbereichs 42 etwa 0.4 Millimeter. Die Breite des ersten Elastizitätsbereichs 38 und des zweiten Elastizitätsbereichs 42 beträgt etwa 0.34 Millimeter.

Auf der dem ersten Elastizitätsbereich 38 abgewandten Seite der Wischlippe 44 schließt sich der zweite Elastizitätsbereich 42 des zweiten Biegebereichs 34 an. Der zweite Elastizitätsbereich 42 ist wiederum an der Tragschiene 22 zugewandten Seite des Stabilisierungsbereichs 40 angeordnet, wobei an der, der Tragschiene 22 abgewandten Seite wieder die zweite Stützschulter 48 angeordnet ist, die einen zweiten Einschnitt 60 in der Wischlippe 44 einzugreifen vermag. Auch hier ist der zweite Stabilisierungsbereich 40 in Richtung der Wischlippe 44 hin etwas vergrößert. An den zweiten Stabilisierungsbereich 40 schließt sich der zweite Befestigungsbereich 30 an, der wiederum mit der Tragschiene 22 verbunden ist.

Wie in den vorangegangenen Ausführungsbeispielen, ist auch in diesem Ausführungsbeispiel die Wischleiste 12 im Querschnitt bezüglich ihrer Mittelachse, die hier als Strichpunktlinie 62 gezeichnet ist, symmetrisch ausgebildet.

In Figur 5 ist das Wischblatt aus Figur 4 während einer Wischbewegung dargestellt. Die Wischbewegung verläuft hier von links nach rechts in der Zeichnungsebene und ist durch den Richtungspfeil 64 verdeutlicht. Um Wiederholungen zu vermeiden werden hier nur die Unterschiede zu Figur 4 beschrieben. Die Ausführungen aus Figur 4 gelten hier insoweit fort.

Wird das Wischblatt 10 über die Scheibe 14 in Richtung des Richtungspfeils 64 bewegt, so wird die auf der Scheibe 14 aufliegende Wischlippe 44 entsprechend ihrer Bewegungsmöglichkeiten mitgeschleppt. Der erste Elastizitätsbereich 38 lässt die Wischlippe 44 dann entgegen der Schlepprichtung (Richtungspfeil 64) auslenken, bis zu dem Punkt, an den die Stützschulter 46 die Wischlippe 44 an einer weiteren Auslenkung verhindert. Hierzu ist zusätzlich der erste Einschnitt 58 vorgesehen, in den die erste Stützschulter 46 eingreift. Insgesamt wird dadurch der erste Biegebereich 32 und der zweite Biegebereich 34, mithin auch der erste Stabilisierungsbereich 36 und der zweite Stabilisierungsbereich 40 etwas ausgelenkt.

Bei einer Bewegung entgegen dem Richtungspfeil 64 geschieht das gleiche, jedoch wird dann entsprechend der zweite Biegebereich 34, insbesondere der zweite Elastizitätsbereich 42, ausgelenkt.

In einer Variation kann der erste Stabilitätsbereich 36 und der zweite Stabilitätsbereich 40 auch relativ starr ausgebildet sein, so daß sich einzig die Wischlippe 44 bewegt und der erste Elastizitätsbereich 38 und der zweite Elastizitätsbereich 42 filmscharnierartig zusammenwirken.

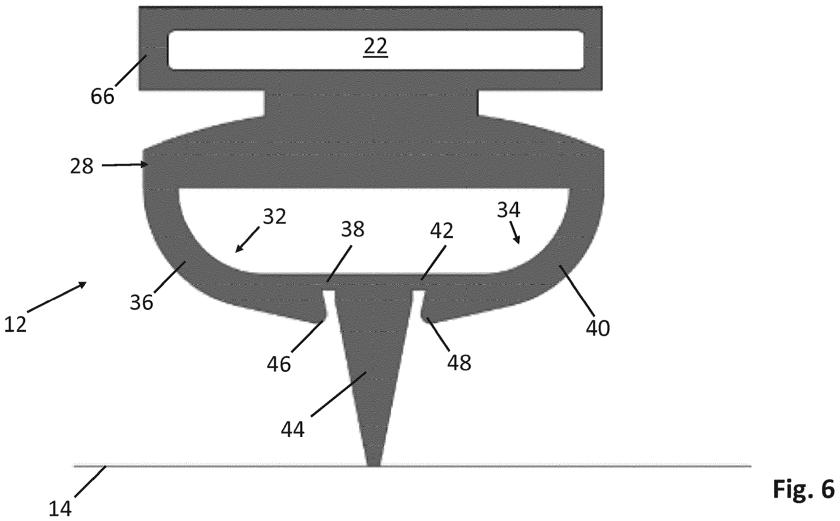

In Figur 6 ist eine Variation der Wischleiste 12 eines nicht beanspruchten Wischblatts 10 im Querschnitt dargestellt. Die Wischlippe 44 ist zwischen den ersten Biegebereich 32 und dem zweiten Biegebereich 34 gehaltert. Hierzu weist der erste Biegebereich 32 den ersten Elastizitätsbereich 38 auf und der zweite Biegebereich 34 den zweiten Elastizitätsbereich 42, die mit der Wischlippe 44 in Verbindung stehen. Sowohl der erste Biegebereich 32 wie auch der zweite Biegebereich 34 sind im Querschnitt von länglicher Gestalt und einen Ends mit der Wischlippe 44 verbunden. Das andere Ende des ersten Biegebereichs 32 ist mit dem ersten Befestigungsbereich 28 verbunden. Im Gegensatz zu den vorherigen Beispielen, ist der zweite Biegebereich 34 hier ebenfalls mit dem ersten Befestigungsbereich 28 verbunden. Der erste Befestigungsbereich 38 ist hierbei derart ausgebildet, dass er im Querschnitt die Wischlippe 44, den ersten Biegebereich 32 und den zweiten Biegebereich 34 übergreift. Auf der der Wischlippe 44 abgewandten Seite ist der erste Befestigungsbereich 28 mit einem Umhüllungsbereich 66 verbunden, der die Tragschiene 22 umhüllt.

Wie im vorhergehenden Beispiel ist der erste Elastizitätsbereich 38 an dem dem ersten Befestigungsbereich 28 abgewandten Ende des ersten Stabilitätsbereichs 32 angeordnet und zwar an der der Tragschiene 22 zugewandten Seite. Auf der der Tragschiene 22 abgewandten Seite des ersten Stabilitätsbereichs 36 ist die erste Stützschulter 36 ausgebildet. Entsprechendes gilt für den zweiten Biegebereich 34. Dieser ist hier jedoch ebenfalls am ersten Befestigungsbereich 28 befestigt und von im Wesentlichen länglicher Gestalt. Ausgehend vom ersten Befestigungsbereich 28 erstreckt sich der zweite Stabilitätsbereich 40, der von im Wesentlichen im Querschnitt länglicher, C-förmiger Gestalt ist und an seinem Ende etwas breiter ausgebildet ist. Im Gegensatz zu den vorangegangenen Beispielen verläuft das Ende des ersten Stabilitätsbereichs 36 an seiner Stirnseite, die erste Stützschulter 46 bildet, im Querschnitt etwa parallel zur Wischlippe 44, also etwas schräg zu einer durch die Tragschiene 22 gebildeten Ebene. Ebenso die Stirnseite des zweiten Stabilitätsbereichs 40.

An diesem Ende, also an dieser Stirnseite, ist auf der der Tragschiene 22 zugewandten Seite der zweite Elastizitätsbereich 42 angeordnet und auf der, der Tragschiene 22 abgewandten Seite die zweite Stützschulter 48 gebildet. Die Wischlippe 44 ist zwischen dem ersten Elastizitätsbereich 38 und dem zweiten Elastizitätsbereich 42 gehaltert, wobei der erste Elastizitätsbereich 38 und der zweite Elastizitätsbereich 42 ähnlich Filmscharnieren die Wischlippe 44 haltern.

Bei diesem Ausführungsbeispiel ist es zweckmäßig die Wischleiste 12 in einem Mehrkomponentenextrusionsverfahren herzustellen. Hier kann der Umhüllungsbereich 66 beispielsweise aus einem anderen Kunststoff gefertigt werden als die Wischlippe 44, der erste Biegebereich 32 und der zweite Biegebereich 34.

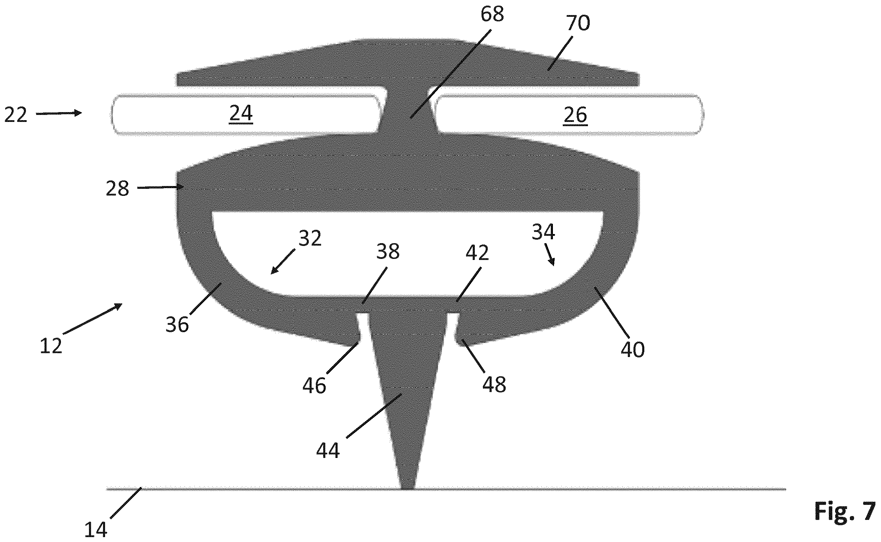

In Figur 7 ist eine weitere Variation eines nicht beanspruchten Wischblatts 10 im Querschnitt dargestellt. Um Wiederholungen zu vermeiden wird auch hier nur der Unterschied zum Ausführungsbeispiel aus Figur 6 erläutert. Die Erläuterungen aus dem vorangegangenen Ausführungsbeispiel mit den entsprechenden Bezugsziffern gelten hier insoweit fort. Die Tragschienen 22 ist hier zwei geteilt ausgeführt. Zwischen dem ersten Schienenteil 24 und dem zweiten Schienenteil 26 weist der erste Befestigungsbereich 28 einen Durchtritt 68 auf, der in einem Deckabschnitt 70 mündet, der breiter ist, als der Abstand des ersten Schienenteils 24 vom zweiten Schienenteil 26. Zwischen dem Deckabschnitt 70 und dem unteren Teil des ersten Befestigungsbereichs 28 sind daher Nuten gebildet, in die das erste Schienenteil 24 bzw. das zweite Schienenteil 26 eingreift. Der erste Befestigungsbereich 28 ist auf der, der Tragschiene 22 zugewandten Seite abgerundet, ballig, ausgeführt. Bei einem leichten Verkippen des ersten Befestigungsbereichs 28 schlägt dieser dann nicht auf der Tragschiene 22 auf sondern rollt auf derselben geräuschlos ab.

In sämtlichen Ausführungsbeispielen ist die Wischlippe 44, der erste Biegebereich 32, der zweite Biegebereich 34 und der erste Befestigungsbereich 28 sowie der zweite Befestigungsbereich 30, mithin die gesamte Wischleiste 12 aus elastischem Material, beispielsweise Gummi aus Naturkautschuk oder EPDM, hergestellt. Die gesamte Wischleiste 12 kann so in einem Einkomponentigen oder Mehrkomponentigen Extrusionsverfahren hergestellt werden. Die Tragschiene 22 ist aus Stahl ausgebildet, beispielsweise aus einem Stahlband von einer Rolle abgestanzt, jedoch kann die Tragschiene auch aus Kunststoff ausgebildet sein.

Grundsätzlich, also für alle hier beschriebenen Ausführungsbeispiele, beträgt die Materialstärke des ersten Stabilitätsbereichs 36 und des zweiten Stabilitätsbereichs 40 beträgt zwischen 0,6 und 1,5 mm, insbesondere zwischen 0,8 und 1,1 mm vorzugsweise etwa 1 mm. Die Materialstärke als die Dicke des ersten Elastizitätsbereichs 38 und des zweiten Elastizitätsbereichs 42 beträgt zwischen 0,2 und 0,6 mm, vorzugsweise zwischen 0,3 und 0,5 mm idealerweise ca. 0,4 mm. Die Breite des ersten Elastizitätsbereichs 38 und die Breite des zweiten Elastizitätsbereichs 42, also der Abstand zwischen dem ersten Stabilitätsbereich 36 und der Wischlippe 44 bzw. der Abstand zwischen dem zweiten Stabilisierungsbereichs 40 und der Wischlippe 44 beträgt zwischen 0,05 mm und 0,8 mm, insbesondere zwischen 0,1 und 0,6 mm, vorzugsweise etwa 0,35 mm. In einer Variation der Erfindung können auch mehrere Elastizitätsbereiche auf jeder Seite, also mehr als zwei Elastizitätsbereiche vorgesehen sein. Diese können sich dann mit entsprechend mehreren Stabilitätsbereichen entlang der Längserstreckung des ersten Biegebereichs 32 bzw. des zweiten Biegebereichs 34 abwechseln.

## Patentansprüche

1. Wischblatt (10) umfassend eine federnde Tragschiene (22) und eine Wischleiste (12), die an der Tragschiene (22) befestigt ist, wobei die Wischleiste (12) eine Wischlippe (44) mit einer im wesentlichen starren Querschnittsstruktur aufweist und die Wischlippe (44) im Querschnitt zwischen einem ersten Biegebereich (32) und einem zweiten Biegebereich (34) gehaltert ist, wobei der erste Biegebereich (32) und/oder der zweite Biegebereich (34) mindestens eine erste Stützschulter (46) zur Abstützung der Wischlippe (44) aufweist, wobei die Wischlippe (44) von im Wesentlichen dreieckiger Gestalt ist, **dadurch gekennzeichnet, dass** die Wischlippe im Querschnitt einen ersten Einschnitt (58) auf Höhe der ersten Stützschulter (46) aufweist, der zur Aufnahme der ersten Stützschulter (46) im Betrieb vorgesehen ist.

2. Wischblatt (10) nach Anspruch 1, **dadurch gekennzeichnet, dass** ein erster Befestigungsbereich (28) zur Befestigung der Wischlippe (44) an der Tragschiene (22) vorgesehen ist, der sich zumindest an den ersten Biegebereich (32) anschließt.

3. Wischblatt (10) nach einem der vorhergehenden Ansprüche, **dadurch gekennzeichnet, dass** ein zweiter Befestigungsbereich (30) vorgesehen ist, der sich an den zweiten Biegebereich (34) anschließt und zur Befestigung der Wischlippe (44) an der Tragschiene (22) vorgesehen ist.

4. Wischblatt (10) nach einem der vorhergehenden Ansprüche, **dadurch gekennzeichnet, dass** die Wischlippe (44) im Querschnitt eine im wesentlichen dreieckige Außenkontur aufweist.

5. Wischblatt (10) nach einem der vorhergehenden Ansprüche, **dadurch gekennzeichnet, dass** der erste Biegebereich (32) einen ersten Stabilisierungsbereich (36) und einen ersten Elastizitätsbereich (38) aufweist.

6. Wischblatt (10) nach einem der vorhergehenden Ansprüche, **dadurch gekennzeichnet, dass** der zweite Biegebereich (34) einen zweiten Stabilisierungsbereich (40) und einen zweiten Elastizitätsbereich (42) aufweist.

7. Wischblatt (10) nach Anspruch 5, **dadurch gekennzeichnet, dass** sich der erste Elastizitätsbereich (38) unmittelbar an die Wischlippe (44) anschließt.

8. Wischblatt (10) nach Anspruch 6 oder 7, **dadurch gekennzeichnet, dass** sich der zweite Elastizitätsbereich (42) unmittelbar an die Wischlippe (44) anschließt.

9. Wischblatt (10) nach einem der Ansprüche 5 bis 8, **dadurch gekennzeichnet, dass** die erste Stützschulter (46) am ersten Stabilisierungsbereich (36) vorgesehen ist.

10. Wischblatt (10) nach einem der Ansprüche 6 bis 9, **dadurch gekennzeichnet, dass** eine zweite Stützschulter (48) am zweiten Stabilisierungsbereich (40) vorgesehen ist.

11. Wischblatt (10) nach Anspruch 2 oder 3, **dadurch gekennzeichnet, dass** die Tragschiene (22) als im Querschnitt flache Federschiene mit Längskanten (52, 56) ausgebildet ist und der erste Befestigungsbereich (28) und /oder der zweite Befestigungsbereich (30) die Längskanten (52, 56) klammerartig umgreift.

## Claims

1. Wiper blade (10) comprising a resilient support rail (22) and a wiper strip (12) which is fastened to the support rail (22), wherein the wiper strip (12) has a wiper lip (44) with a substantially rigid cross-sectional structure and the wiper lip (44) is mounted in cross section between a first bending region (32) and a second bending region (34), wherein the first bending region (32) and/or the second bending region (34) has at least one first support shoulder (46) for supporting the wiper lip (44), wherein the wiper lip (44) has a substantially triangular shape, **characterized in that** the wiper lip has in cross section a first incision (58) at the level of the first support shoulder (46), said incision (58) being intended to receive the first support shoulder (46) during operation.

2. Wiper blade (10) according to Claim 1, **characterized in that** a first fastening region (28) is provided for fastening the wiper lip (44) to the support rail (22), said first fastening region adjoining at least the first bending region (32).

3. Wiper blade (10) according to either of the preceding claims, **characterized in that** a second fastening region (30) is provided, which adjoins the second bending region (34) and is provided for fastening the wiper lip (44) to the support rail (22) .

4. Wiper blade (10) according to one of the preceding claims, **characterized in that** the wiper lip (44) has a substantially triangular outer contour in cross section.

5. Wiper blade (10) according to one of the preceding claims, **characterized in that** the first bending region (32) has a first stabilizing region (36) and a first resilient region (38).

6. Wiper blade (10) according to one of the preceding claims, **characterized in that** the second bending region (34) has a second stabilizing region (40) and a second resilient region (42).

7. Wiper blade (10) according to Claim 5, **characterized in that** the first resilient region (38) directly adjoins the wiper lip (44).

8. Wiper blade (10) according to Claim 6 or 7, **characterized in that** the second resilient region (42) directly adjoins the wiper lip (44).

9. Wiper blade (10) according to one of Claims 5 to 8, **characterized in that** the first support shoulder (46) is provided in the first stabilizing region (36) .

10. Wiper blade (10) according to one of Claims 6 to 9, **characterized in that** a second support shoulder (48) is provided in the second stabilizing region (40).

11. Wiper blade (10) according to Claim 2 or 3, **characterized in that** the support rail (22) is in the form of a cross-sectionally flat spring rail with longitudinal edges (52, 56) and the first fastening region (28) and/or the second fastening region (30) engages around the longitudinal edges (52, 56) in a clamp-like manner.

## Revendications

1. Balai d'essuie-glace (10) comprenant un rail porteur élastique (22) et une lame d'essuyage (12), qui est fixée au rail porteur (22), la lame d'essuyage (12) présentant une lèvre d'essuyage (44) ayant une structure de section transversale essentiellement rigide et la lèvre d'essuyage (44) étant maintenue dans la section transversale entre une première zone de flexion (32) et une deuxième zone de flexion (34), la première zone de flexion (32) et/ou la deuxième zone de flexion (34) présentant au moins un premier épaulement de support (46) pour supporter la lèvre d'essuyage (44), la lèvre d'essuyage (44) étant de configuration essentiellement triangulaire, **caractérisé en ce que** la lèvre d'essuyage présente dans la section transversale une première entaille (58) à hauteur du premier épaulement de support (46), qui est prévue pour recevoir le premier épaulement de support (46) en fonctionnement.

2. Balai d'essuie-glace (10) selon la revendication 1, **caractérisé en ce qu'**une première zone de fixation (28) est prévue pour fixer la lèvre d'essuyage (44) au rail porteur (22), qui se raccorde au moins à la première zone de flexion (32).

3. Balai d'essuie-glace (10) selon l'une quelconque des revendications précédentes, **caractérisé en ce qu'**une deuxième zone de fixation (30) est prévue, qui se raccorde à la deuxième zone de flexion (34) et qui est prévue pour fixer la lèvre d'essuyage (44) au rail porteur (22).

4. Balai d'essuie-glace (10) selon l'une quelconque des revendications précédentes, **caractérisé en ce que** la lèvre d'essuyage (44) présente dans la section transversale un contour extérieur essentiellement triangulaire.

5. Balai d'essuie-glace (10) selon l'une quelconque des revendications précédentes, **caractérisée en ce que** la première zone de flexion (32) présente une première zone de stabilisation (36) et une première zone d'élasticité (38) .

6. Balai d'essuie-glace (10) selon l'une quelconque des revendications précédentes, **caractérisé en ce que** la deuxième zone de flexion (34) présente une deuxième zone de stabilisation (40) et une deuxième zone d'élasticité (42) .

7. Balai d'essuie-glace (10) selon la revendication 5, **caractérisé en ce que** la première zone d'élasticité (38) se raccorde directement à la lèvre d'essuyage (44).

8. Balai d'essuie-glace (10) selon la revendication 6 ou 7, **caractérisé en ce que** la deuxième zone d'élasticité (42) se raccorde directement à la lèvre d'essuyage (44).

9. Balai d'essuie-glace (10) selon l'une quelconque des revendications 5 à 8, **caractérisée en ce que** le premier épaulement de support (46) est prévu sur la première zone de stabilisation (36).

10. Balai d'essuie-glace (10) selon l'une quelconque des revendications 6 à 9, **caractérisé en ce qu'**un deuxième épaulement de support (48) est prévu sur la deuxième zone de stabilisation (40).

11. Balai d'essuie-glace (10) selon la revendication 2 ou 3, **caractérisé en ce que** le rail porteur (22) est conçu sous forme de rail élastique plat dans la section transversale avec des bords longitudinaux (52, 56) et la première zone de fixation (28) et/ou la deuxième zone de fixation (30) viennent en prise autour des bords longitudinaux (52, 56) à. la manière d'une pince.
